# EUROPÄISCHE PATENTSCHRIFT

(11) **EP 2 958 874 B1**
(45) Veröffentlichungstag und Bekanntmachung des Hinweises auf die Patenterteilung: **11.04.2018**
(21) Anmeldenummer: 13709333.2
(22) Anmeldetag: 20.02.2013
(51) Int. Cl.: C04B 26/18, C04B 28/18, C04B 26/02

(54) **POLYMERBETON UND VERFAHREN ZU DESSEN HERSTELLUNG**
POLYMER CONCRETE AND METHOD FOR THE PRODUCTION THEREOF
BÉTON À POLYMÈRE ET PROCÉDÉ DE PRÉPARATION DUDIT BÉTON À POLYMÈRE

(43) Veröffentlichungstag der Anmeldung: 30.12.2015
(73) Patentinhaber: Polycare Research Technology GmbH & Co. KG, 98559 Gehlberg (DE)
(72) Erfinder: PLÖTNER, Gunther, 99310 Arnstadt (DE)
(74) Vertreter: Liedtke, Markus
(86) Internationale Anmeldenummer: PCT/EP2013/053317
(87) Internationale Veröffentlichungsnummer: WO 2014/127809

(56) Entgegenhaltungen:
- EP-A1- 2 062 863
- EP-A2- 0 974 606
- WO-A1-2006/072241
- WO-A1-2009/071038
- CH-A5- 602 846
- DE-A1-102011 005 187
- DE-B3-102011 077 254
- DE-C2- 3 943 836
- DATABASE WPI Week 200305 Thomson Scientific, London, GB; AN 2003-054470 XP002718600, -& KR 2002 0039953 A (YOON W S) 30. Mai 2002 (2002-05-30)

## Beschreibung

Die Erfindung betrifft einen Polymerbeton gemäß dem Oberbegriff des Anspruchs 1. Weiterhin betrifft die Erfindung ein Verfahren zur Herstellung eines Polymerbetons gemäß dem Oberbegriff des Anspruchs 8.

Herkömmlicher Polymerbeton umfasst ein Polymer als Bindemittel mit einem meist mineralischen Füllstoff, der durch das Bindemittel zusammengehalten wird. Polymerbeton weist eine geringere Erhärtungszeit (auch Topfzeit genannt) und eine geringere Dichte als rein mineralischer Beton und eine bessere Schwingungsdämpfung auf.

Aus dem Stand der Technik ist, wie in der DE 10 2011 077 254 B3 beschrieben, eine Harzmischung bekannt, welche mindestens eine radikalisch polymerisierbare Verbindung, gegebenenfalls einen Reaktiwerdünner und ein Mittel zur Einstellung der Reaktivität und der Gelzeit umfasst.

Der Erfindung liegt die Aufgabe zu Grunde, einen gegenüber dem Stand der Technik verbesserten Polymerbeton und ein verbessertes Verfahren zu dessen Herstellung anzugeben.

Die Aufgabe wird hinsichtlich des Polymerbetons erfindungsgemäß durch die im Anspruch 1 angegebenen Merkmale gelöst. Die Aufgabe wird hinsichtlich des Verfahrens erfindungsgemäß durch die im Anspruch 8 angegebenen Merkmale gelöst.

Vorteilhafte Ausgestaltungen der Erfindung sind Gegenstand der Unteransprüche.

Bei einem erfindungsgemäßen Polymerbeton besteht das Polymerbetongemisch aus 83 bis 87 Volumenprozent eines Füllstoffs oder eines Füllstoffgemischs, 12,9 bis 16,9 Volumenprozent eines Harz-Härter-Beschleuniger-Gemenges und 0,1 bis 0,5 Volumenprozent zumindest eines Additivs oder 0,1 bis 0,5 Volumenprozent zumindest eines Additivs und Inhibitors. Das

Harz-Härter-Beschleuniger-Gemenge besteht aus zumindest einem Harz oder einem Harzgemisch aus einer Mehrzahl von Harzen, einem Härter oder Härtergemisch und einem Beschleuniger oder Beschleunigergemisch. Dabei weist das Harz-Härter-Beschleuniger-Gemenge 1,2 bis 2 Volumenprozent Härter oder Härtergemisch und 0,8 bis 1,8 Volumenprozent Beschleuniger oder Beschleunigergemisch auf. Bei dem Harz-Härter-Beschleuniger-Gemenge handelt es sich um eine Zusammenmengung aus dem Harz oder Harzgemisch, Härter oder Härtergemisch und Beschleuniger oder Beschleunigergemisch, d. h. der Härter oder das Härtergemisch sowie der Beschleuniger oder das Beschleunigergemisch sind zum Harz oder Harzgemisch hinzudosiert. Beispielsweise wird zunächst der Beschleuniger oder das Beschleunigergemisch zum Harz oder Harzgemisch hinzudosiert und mit diesem vermengt oder vermischt. Des Weiteren hinzudosiert und vermengt oder vermischt wird zweckmäßigerweise der zumindest eine Inhibitor und/oder das zumindest eine Additiv. Das Gemisch dieser Komponenten sowie der Härter oder das Härtergemisch und der Füllstoff oder das Füllstoffgemisch werden dann in einer Dosier-Mischmaschine zusammengebracht und miteinander zu einem homogenen Polymerbetongemisch vermengt. Der Füllstoff oder das Füllstoffgemisch ist ausschließlich aus ungereinigtem Gesteinsbruch und/oder ungereinigtem Gesteinsmehl und/oder ungereinigtem und/oder unklassifiziertem Sand gebildet. Dadurch ist ein besonders einfach herzustellender Polymerbeton ermöglicht, welcher eine hohe Festigkeit, einen hohen Elastizitätsmodul, eine große chemische und/oder mechanische Widerstandsfähigkeit und/oder -beständigkeit, eine hohe Abriebfestigkeit und eine geringe Wasseraufnahme aufweist. Weiterhin ist der erfindungsgemäße Polymerbeton besonders korrosions-, alterungs- und witterungsbeständig und nahezu schwundfrei.

Der Polymerbeton ist beispielsweise als ein Formteil auszubilden, beispielsweise in Form einer Polymerbetonschicht, in Form eines Bausteins oder eines anderen Bauelementes für ein Bauwerk, zum Beispiel für ein Gebäude. Beispielsweise ist der Polymerbeton in Form eines Boden-, Wand- oder Deckensegments für ein Bauwerk, oder auch in Form eines funktionalen Bauelementes auszubilden, zum Beispiel in Form eines Rohrs oder einer Rinne. Im noch nicht ausgehärteten Zustand ist das Polymerbetongemisch in der oben angegebenen Zusammensetzung fließfähig und kann daher in eine Gießform eingefüllt werden, um die gewünschte Form des jeweiligen Formteils nach dem Polymerisieren und Aushärten zu erhalten. Der Füllstoff oder das Füllstoffgemisch ist frei von Zusätzen von klassifizierten Zusatzstoffen, wie zum Beispiel Calciumcarbonat und Quarzsand und/oder ähnliche klassifizierte Zusatzstoffe. Dadurch ist eine sehr kostengünstige und effiziente Herstellung des Polymerbetons ermöglicht, da eine solche Verwendung kostenintensiver klassifizierter Zusatzstoffe nicht erforderlich ist. Diese Stoffe können im Füllstoff oder Füllstoffgemisch, beispielsweise in herkömmlichem Wüstensand, bereits enthalten sein. Es erfolgt jedoch kein gezielter Zusatz derartiger klassifizierter Zusatzstoffe. Daraus resultieren eine Kostenreduzierung und eine Reduzierung eines Produktionsaufwands. Der Füllstoff oder das Füllstoffgemisch ist mit organischem Material verunreinigt und/oder versetzt. Auf diese Weise kann als Füllstoff oder Füllstoffgemisch Füllstoffmaterial verwendet werden, ohne dieses auf organisches Material untersuchen und reinigen zu müssen. Daher ist für den Polymerbeton ein Füllstoff oder ein Füllstoffgemisch zu verwenden, welches mit organischem Material verunreinigt und/oder versetzt ist, beispielsweise herkömmlicher Wüstensand, welcher direkt vor Ort, d. h. dort, wo der Polymerbeton jeweils herzustellen ist, zur Verfügung steht und ohne Untersuchungen auf organisches Material sowie ohne Reinigungsarbeiten zur Entfernung vorhandenen organischen Materials sofort zu verarbeiten ist. Das heißt, es wird dadurch ermöglicht, als Füllstoff oder Füllstoffgemisch für den Polymerbeton beispielsweise herkömmlichen ungereinigten Wüstensand zu verwenden. Eine aufwändige und kostenintensive Aufbereitung des Füllstoffs oder Füllstoffgemischs ist nicht erforderlich.

Vorteilhafterweise weisen Formelemente aus dem erfindungsgemäßen Polymerbeton eine besonders hohe Beständigkeit gegen hohe Temperaturen, Temperaturschwankungen, Feuchtigkeit und Schädlings - oder Ungezieferbefall auf. Weiterhin sind solche Formelemente aus Polymerbeton resistent gegen Chemikalien, insbesondere gegen salzhaltige oder saure Umgebungsluft oder Niederschlag, und verwitterungsbeständig. Dadurch tritt während des Gebrauchs keinerlei Stabilitätsverlust an den Formelementen auf und die bei herkömmlichen Bauelementen notwendigen periodischen Sanierungsmaßnahmen sind vermieden.

Als Füllstoff oder Füllstoffgemisch werden gebrochene Mineralstoffe wie ungereinigter Gesteinsbruch und/oder Gesteinsmehl, ungereinigter und/oder unklassifizierter Sand, insbesondere herkömmlicher Steppen- und/oder Wüstensand, ohne Zusätze von klassifizierten Zusatzstoffen, wie z.B. Calciumcarbonat, Quarzsand u.Ä., verwendet, wobei der Füllstoff oder das Füllstoffgemisch mit organischem Material verunreinigt und/oder versetzt ist. Dadurch entfällt vorteilhafterweise eine aufwendige Aufarbeitung oder Reinigung des Füllstoffs oder des Füllstoffgemischs.

Besonders vorteilhafterweise kann der Füllstoff oder das Füllstoffgemisch aus herkömmlichen Abraummaterial jedweder Gesteinsart und/oder Recyclingmaterial bestehen.

Besonders zweckmäßigerweise sind regional vorhandene Füllstoffe oder Füllstoffgemische verwendbar, so dass beispielweise in Afrika dort vorhandener Steppen- und/oder Wüstensand ohne weitere Aufarbeitung direkt als Füllstoff vor Ort verwendbar ist.

Um einen Polymerisations- und/oder Abbindevorgang des erfindungsgemäßen Polymerbetons zu ermöglichen, weisen der Härter oder das Härtergemisch und/oder der Beschleuniger oder das Beschleunigergemisch eine auf den jeweiligen Füllstoff oder das jeweilige Füllstoffgemisch abgestimmte chemische Zusammensetzung und/oder einen abgestimmten Molekülaufbau auf.

Um den Polymerisations- und/oder Abbindevorgang des erfindungsgemäßen Polymerbetons mit unklassifizierten Füllstoffen zu ermöglichen, wurde die Basis für eine Matrix mit repräsentativem Ausschnitt von Zusammensetzungen der weltweit am häufigsten vorkommenden Füllstoffe gelegt. Hauptbestandteil der meisten Füllstoffe oder Füllstoffgemische wird Siliciumdioxid sein, allerdings mit deutlich wechselnden Anteilen. Weiterhin werden karbonatische Bestandteile, wie z.B. Calcit, Dolomit und Aragonit enthalten sein, sowie kleinste Beimengungen von Magnesium, Eisen, Aluminium oder ähnlichem, die dazu führen, dass mineralogisch andere Phasen bzw. Modifikationen entstehen. Mit Hilfe der Matrix wird der benötigte Härter oder das benötigte Härtergemisch und/oder der benötigte Beschleuniger oder das benötigte Beschleunigergemisch und/oder das benötigte Harz oder Harzgemisch und/oder die benötigten Additive und/oder Inhibitoren gewählt, die eine auf den jeweiligen Füllstoff oder das jeweilige Füllstoffgemisch abgestimmte chemische Zusammensetzung besitzen und einen abgestimmten Molekülaufbau aufweisen.

Entgegen dem Stand der Technik von Polymerbeton wird bei ungereinigten und/oder unklassifizierten Füllstoffen oder Füllstoffgemischen, die mit organischem Material verunreinigt und/oder versetzt sind, größtenteils kein Standardbeschleuniger mit nur einer Beschleunigerkomponente, wie z.B. Cobalt Beschleuniger oder Kupfer Beschleuniger verwendet. Durch die mit der Zeit teilweise entstandenen Anlagerungen an den Sandkörnern, die eine vergrößerte und verformte Oberflächenstruktur zur Folge haben, adsorbiert die Einzelkomponente am Sandkorn und kann die benötigte Beschleunigungsleistung nicht aufbringen und erreicht demnach nicht die notwendige Starttemperatur von mindestens 72°C. Um diesem Effekt entgegen zu wirken, wird ein mehrkomponentiger Beschleuniger (Mischbeschleuniger) in der Form eines Cobalt-Amin-Beschleunigers eingesetzt, wodurch eine Beschleunigung in 2 Etappen - analog einer Initialzündung entsteht. Anschließend erfolgt ein kontinuierlicher Fortgang der Reaktion mit dem Härter respektive der exothermen Polymerisation des Harzes oder des Harzgemisches.

Um die Viskosität und die Thixotropie positiv zu beeinflussen und somit das Fließverhalten des erfindungsgemäßen Polymerbetons zu optimieren, werden organische Additive mit konjugierten Doppelbindungssystemen wie beispielsweise Dimethyl Pabamidopropyllaurdimonium-tosylat verwendet. Diese sorgen dafür, dass beim Rütteln der gegossenen Masse die Lunkerbildung durch Entlüften verringert wird und somit auch das Gießen von Formen mit feinen Stegen realisiert werden kann.

Durch den Einsatz von anorganischen Pigmentierungen wie beispielsweise Titanoxid - Rutil- oder Anatas-Typ und organischen Additiven mit konjugierten Doppelbindungssystemen wird die UV-Beständigkeit, die gerade in Wüsten- und Steppengegenden von sehr großer Bedeutung ist, weiter verbessert.

Wenn das Material zu schnell aushärtet und die Verarbeitung somit wesentlich erschwert wird bzw. es bei ungleichmäßigen geometrischen Formen zu Spannungen in dem Polymerbetongemisches kommt, die Rissbildungen nach sich ziehen, kann mit Hilfe von Inhibitoren, die beispielsweise auf Basis von 4-tert-Butyl-1,2-dihydroxybenzene sind, die Gelierzeit/Aushärtzeit, respektive die Verarbeitungszeit wesentlich verlängert werden ohne das mechanische Belastungseigenschaften vermindert werden.

Aus dem Vorgenannten folgt somit Folgendes:
Hauptbestandteil des Füllstoffs oder Füllstoffgemischs für den Polymerbeton ist beispielsweise Siliciumdioxid. Weitere Bestandteile des Füllstoffs oder Füllstoffgemischs sind beispielsweise karbonatische Bestandteile, wie z.B. Calcit, Dolomit und/oder Aragonit. Der Füllstoff und/oder das Füllstoffgemisch enthält zudem beispielsweise kleinste Beimengungen von Magnesium, Eisen, Aluminium oder ähnlichem.

Der Beschleuniger oder das Beschleunigergemisch ist ein mehrkomponentiger Beschleuniger (Mischbeschleuniger), erfindungsgemäß ein Cobalt-Amin-Beschleuniger.

Das zumindest eine Additiv ist erfindungsgemäß ein organisches Additiv mit zumindest einem konjugierten Doppelbindungssystem, insbesondere Dimethyl-Pabamidopropyllaurdimonium-tosylat.

Des Weiteren kann das Polymerbetongemisch des Polymerbetons organische Pigmentierungen wie beispielsweise Titanoxid - Rutil- oder Anatas-Typ aufweisen.

Der zumindest eine Inhibitor ist beispielsweise ein Inhibitor auf Basis von einem oder mehreren 4-tert-Butyl-1,2-dihydroxybenzenen.

Als Harz wird ein herkömmliches Harz als Bindemittel, beispielweise, ein Polyesterharz, ein Epoxidharz und/oder ein analoges Reaktionsharz, oder ein Gemisch aus einer Mehrzahl herkömmlicher Harze verwendet. Das Harz oder Harzgemisch aus einer Mehrzahl von Harzen weist zweckmäßigerweise eine Wärmeformbeständigkeit (HDT) von mindestens 90°C auf. Durch den Einsatz polyfunktionaler Harze wird über die Vernetzung das Schwundverhalten signifikant beeinflusst.

In einem vorteilhaften Ausführungsbeispiel des Polymerbetons besteht das Polymerbetongemisch aus 85 Volumenprozent eines Füllstoffgemischs, dessen Hauptbestandteile Siliciumdioxid, Mikroklin, Calcit, Magnesium Calcit, Dolomit und Aragonit sind, 14,9 Volumenprozent eines Harz-Härter-Beschleuniger-Gemenges, welches aus einem ungesättigten Polyesterharz, 1 Volumenprozent eines Cobalt-Amin-Beschleunigers und 1,4 Volumenprozent eines MEKP-AAP-Härters (MEKP-AAP bedeutet Methylethylketonperoxid-Acetylacetonperoxid) gebildet ist, und 0,1 Volumenprozent eines Inhibitors auf Basis von 4-tert-Butyl-1,2-dihydroxybenzen. Der Füllstoff oder das Füllstoffgemisch entspricht Wüstensand aus Libyen, der sich laut Mineralphasenzusammensetzung mittels Röntgenfluoreszenzanalyse aus den Hauptbestandteilen Siliciumdioxid, Mikroklin, Calcit, Magnesium Calcit, Dolomit und Aragonit zusammensetzt.

Um höhere Festigkeiten des Polymerbetons zu erzielen, sind in den Füllstoff oder in das Füllstoffgemisch Kunst- und/oder Naturfasern eingebracht. Dabei kann es sich beispielweise um Glasfasern, Bambusfasern, Industriehanf und/oder Flachs handeln, welche mittels des erfindungsgemäßen Verfahrens im Polymerbeton eingebettet sind.

In einer besonders vorteilhaften Ausführungsform können die Kunst- und/oder Naturfasern zu einem reißfesten Gewebe, beispielsweise einer Matte, verwirkt sein und derart in den Polymerbeton eingebracht werden.

In den Füllstoff oder in das Füllstoffgemisch sind vorteilhafterweise Farbpigmente und/oder Farbstoffe gleich verteilt oder in Form eines Musters oder einer Marmorierung eingebracht. Somit sind mittels des erfindungsgemäßen Verfahrens Formelemente aus Polymerbeton auf einfache Weise in allen Farben und Mustern oder Marmorierungen herstellbar.

In einer vorteilhaften Ausführungsform ist das Polymerbetongemisch mit einem farblosen Gelcoat mit hoher Abriebfestigkeit und/oder Verwitterungsbeständigkeit als Oberflächenschicht mit einer hohen mechanischen und/oder chemischen Beständigkeit umhüllt. Somit ist eine Oberflächenschicht, welche das aus dem Polymerbeton gebildete Formelement schützend umgibt oder umschließt, mit einer besonders hohen chemischen und/oder mechanischen Beständigkeit ermöglicht.

In das Gelcoat sind organische und/oder anorganische Partikel, insbesondere Glassplitter, Metallspäne und/oder Gesteinssplitter, eingebracht, so dass mittels des erfindungsgemäßen Verfahrens eine optisch ansprechende Oberflächengestaltung des Polymerbetons erreicht ist.

Ein Polymerisations- und Abbindevorgang des Polymerbetons erfolgt bevorzugter Weise bei Umgebungsdruck. Dadurch kann im Vergleich zu Polymerisations- und/oder Abbindevorgängen herkömmlichen Polymerbetons der Fertigungsaufwand und der daraus resultierende Energieverbrauch signifikant reduziert werden.

In einem erfindungsgemäßen Verfahren gemäß Anspruch 8 zur Herstellung dieses Polymerbetons wird demzufolge ein Polymerbetongemisch aus 83 bis 87 Volumenprozent eines Füllstoffs oder eines Füllstoffgemischs, 12,9 bis 16,9 Volumenprozent eines Harz-Härter-Beschleuniger-Gemenges aus zumindest einem Harz oder einem Harzgemisch aus einer Mehrzahl von Harzen, einem Härter oder Härtergemisch und einem Beschleuniger oder Beschleunigergemisch und 0,1 bis 0,5 Volumenprozent zumindest eines Additivs oder 0,1 bis 0,5 Volumenprozent zumindest eines Additivs und Inhibitors erzeugt, wobei das Harz-Härter-Beschleuniger-Gemenge 1,2 bis 2 Volumenprozent Härter oder Härtergemisch und 0,8 bis 1,8 Volumenprozent Beschleuniger oder Beschleunigergemisch aufweist und wobei der Füllstoff oder das Füllstoffgemisch ausschließlich aus ungereinigtem Gesteinsbruch und/oder ungereinigtem Gesteinsmehl und/oder ungereinigtem und/oder unklassifiziertem Sand gebildet ist, wobei das Polymerbetongemisch polymerisiert und ausgehärtet wird. Daraus resultieren die bereits zum Polymerbeton geschilderten Vorteile. Weiter detaillierte vorteilhafte Zusammensetzungen wurden oben zum mittels des Verfahrens herzustellenden Polymerbeton bereits genannt.

Bei dem Harz-Härter-Beschleuniger-Gemenge handelt es sich um eine Zusammenmengung aus dem Harz oder Harzgemisch, Härter oder Härtergemisch und Beschleuniger oder Beschleunigergemisch, d. h. der Härter oder das Härtergemisch sowie der Beschleuniger oder das Beschleunigergemisch sind oder werden zum Harz oder Harzgemisch und gegebenenfalls auch schon zu den anderen Komponenten des Polymerbetongemischs hinzudosiert. Beispielsweise wird zunächst der Beschleuniger oder das Beschleunigergemisch zum Harz oder Harzgemisch hinzudosiert und mit diesem vermengt oder vermischt. Des Weiteren hinzudosiert und vermengt oder vermischt wird das zumindest eine Additiv und weiters optional der zumindest eine Inhibitor. Das Gemisch dieser Komponenten sowie der Härter oder das Härtergemisch und der Füllstoff oder das Füllstoffgemisch werden dann in einer Dosier-Mischmaschine zusammengebracht und miteinander zu einem homogenen Polymerbetongemisch vermengt.

Mit dem Verfahren kann der Polymerbeton beispielsweise als ein Formteil ausgebildet werden, beispielsweise in Form einer Polymerbetonschicht, in Form eines Bausteins oder eines anderen Bauelementes für ein Bauwerk, beispielsweise ein Gebäude, zum Beispiel in Form eines Boden-, Wand- oder Deckensegments für ein Bauwerk, oder auch in Form eines funktionalen Bauelementes, zum Beispiel eines Rohrs oder einer Rinne. Im noch nicht ausgehärteten Zustand ist das Polymerbetongemisch in der oben angegebenen Zusammensetzung fließfähig und kann daher in eine Gießform eingefüllt werden, um die gewünschte Form des jeweiligen Formteils nach dem Polymerisieren und Aushärten zu erhalten.

Dazu wird das Polymerbetongemisch nach dem Anmischen, durch welches der Polymerisationsvorgang gestartet wird, zweckmäßigerweise in eine Form gefüllt und darin polymerisiert und abgebunden, d. h. vollständig oder zumindest derart ausgehärtet, dass das ausgebildete Formteil aus der Form entnommen werden kann. Vorzugsweise wird die Form während des Einfüllens und/oder nach dem Einfüllen des Polymerbetongemischs gerüttelt, beispielsweise ab dem Beginn des Einfüllens eine vorgegebene Zeit lang. Durch das Rütteln wird eine gleichmäßige Verteilung des Polymerbetongemischs in der Form erreicht, beispielsweise auch in einer komplex ausgebildeten Form, und es wird ein Entlüften des Polymerbetongemischs erreicht, so dass eine Lunkerbildung vermieden oder zumindest stark reduziert wird. Des Weiteren wird das Polymerbetongemisch durch das Rütteln der Form verdichtet.

Zum Anmischen des Polymerbetongemischs wird beispielsweise eine herkömmliche Mischeinrichtung verwendet, beispielsweise eine herkömmliche Dosier-Mischmaschine, in welche die oben beschriebenen Komponenten des Polymerbetongemischs in der oben beschriebenen Zusammensetzung eingefüllt und vermischt werden. Dabei werden für das
Harz-Härter-Beschleuniger-Gemenge die Anteile des Beschleunigers oder Beschleunigergemischs und die Anteile des Härters oder Härtergemischs stets auf den Anteil des Harz-Härter-Beschleuniger-Gemenges bezogen, um ein sicheres Polymerisieren und Aushärten in der gewünschten Weise zu ermöglichen, d. h. wie oben beschrieben weist das Harz-Härter-Beschleuniger-Gemenge zumindest ein Harz, einen Härter oder ein Härtergemisch aus einer Mehrzahl von Härtern sowie einen Beschleuniger oder ein Beschleunigergemisch aus einer Mehrzahl von Beschleunigern auf. Dabei beträgt der Anteil des Härters oder Härtergemischs am Harz-Härter-Beschleuniger-Gemenge 1,2 bis 2 Volumenprozent und der Anteil des Beschleunigers oder Beschleunigergemischs am Harz-Härter-Beschleuniger-Gemenge beträgt 0,8 bis 1,8 Volumenprozent. Der Anteil des zumindest eines Additivs und/oder des zumindest einen Inhibitors wird auf das gesamte Polymerbetongemisch berechnet und beträgt, wie bereits angegeben, 0,1 bis 0,5 Volumenprozent des Polymerbetongemischs.

Nach dem Vermischen wird dieses Polymerbetongemisch in die jeweilige Gießform eingefüllt und darin ausgehärtet. Der Polymerbeton, welcher dann vollständig polymerisiert und ausgehärtet ist oder zumindest soweit polymerisiert und/oder soweit ausgehärtet ist, dass er ausreichend formstabil ist, wird dann entformt, d. h. die Gießform wird entfernt. Der Polymerbeton ist dann für den jeweiligen Einsatzzweck zu verwenden. Gegebenenfalls ist für eine uneingeschränkte Verwendung noch eine vorgegebene Wartezeit zu beachten, bis der Polymerbeton vollständig polymerisiert und ausgehärtet ist.

Der Polymerisations- und Abbindevorgang des Polymerbetons erfolgt zweckmäßigerweise bei Umgebungstemperatur, so dass der Polymerbeton während des Polymerisations- und/oder Abbindevorgangs nicht erwärmt oder aufgeheizt werden muss. Unter Umgebungstemperatur ist hierbei eine Temperatur von mindestens 20°C zu verstehen.

Die Dauer des Polymerisations- und/oder Abbindevorgangs des Polymerbetons beträgt in Abhängigkeit vom verwendeten Harz, Härter und/oder Beschleuniger vorteilhafterweise 10 bis 60 Minuten. Dadurch ist eine herkömmliche Dauer des Polymerisations- und/oder Abbindevorgangs und auch eine daraus resultierende Verweildauer des Formelements aus Polymerbeton in einer Form signifikant reduziert. Dadurch ist die Produktivität bei der Herstellung von Formelementen aus Polymerbeton gesteigert.

Der erfindungsgemäße Polymerbeton kann bevorzugt zur Herstellung von Form-, Struktur- oder Bauelementen zur Verwendung im Innen- und Außenbereich verwendet werden.

Ausführungsbeispiele der Erfindung werden im Folgenden anhand einer Zeichnung näher erläutert.

Darin zeigt:

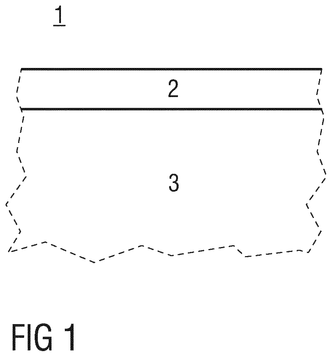

- Figur 1: schematisch eine Schnittdarstellung durch eine erfindungsgemäße Polymerbetonschicht.

**Figur 1** zeigt schematisch eine Schnittdarstellung durch eine erfindungsgemäße Polymerbetonschicht 1. Eine solche Polymerbetonschicht 1 ist aus zumindest zwei Schichten gebildet und umfasst zumindest eine Oberflächenschicht 2 und eine Schicht 3 des Polymerbetongemisches. Dabei ist ein Formelement aus dem erfindungsgemäßen Polymerbeton im Wesentlichen aus der Schicht 3 des Polymerbetongemisches gebildet, welche oberflächenseitig mit der Oberflächenschicht 2 beschichtet ist. Diese oberflächenseitige Beschichtung der Schicht 3 des Polymerbetongemisches kann dabei das Formelement vollständig umschließen oder in einer alternativen Ausführungsform nur teil- oder abschnittsweise bedecken.

In einer alternativen, nicht dargestellten Ausführungsform der Erfindung kann zwischen der Oberflächenschicht 2 und der Schicht 3 des Polymerbetongemisches eine zusätzliche Farb- oder Tragschicht angeordnet sein.

Die Oberflächenschicht 2 ist eine Schicht eines farblosen herkömmlichen Gelcoats mit einer Schichtdicke von vorzugsweise 0,8 bis 1,0 mm. Die Oberflächenschicht 2 weist eine besonders hohe mechanische und/oder chemische Beständigkeit auf und ist beispielweise besonders abriebfest und verwitterungsbeständig. Unter dem Begriff Gelcoat ist ein Beschichtungsmaterial zu verstehen, welches aus einem Kunstharz gebildet ist, üblicherweise aus einem Polyesterharz, genauer gesagt aus einem ungesättigten Polyester, welches mit Kieselsäure angedickt ist. Des Weiteren kann dieses als Gelcoat bezeichnete Beschichtungsmaterial Styrol und Methyl-methacrylat und/oder Styrol und Cobalt-(III)-bis(2-ethylhexanoat) enthalten. Zusätzlich kann dieses als Gelcoat bezeichnete Beschichtungsmaterial auf Isophthalsäure-Neopentylglycol (Iso-NPG) basieren.

In das Gelcoat der Oberflächenschicht 2 können in nicht dargestellten Ausführungsformen organische und/oder anorganische Partikel eingebracht werden, so dass eine optisch ansprechende Oberflächengestaltung des Polymerbetons erreicht ist.

Dabei können als Partikel beispielsweise herkömmliche Glassplitter, Gesteinssplitter, Kunststoffspäne oder -partikel und/oder Metallspäne in die Oberflächenschicht 2 eingebettet werden. Dabei erfolgt die Einbettung derart, dass die Partikel vom Gelcoat der Oberflächenschicht 2 fixiert oder gehalten und oberflächenseitig vom Gelcoat bedeckt sind.

In einer nicht dargestellten Ausführungsform ist ein Bauteil ohne separate Oberflächenschicht 2, welches somit nur aus der Schicht 3 des Polymerbetongemisches gebildet ist, herstellbar. Dabei bildet die Schicht 3 des erfindungsgemäßen Polymerbetongemisches eine chemisch und mechanisch beständige Oberfläche aus.

Die Schicht 3 wird vom Polymerbetongemisch gemäß Anspruch 1 gebildet, welches 83 bis 87 Volumenprozent eines Füllstoffs oder eines Füllstoffgemischs, 12,9 bis 16,9 Volumenprozent eines Harz-Härter-Beschleuniger-Gemenges und 0,1 bis 0,5 Volumenprozent von Additiven und/oder Inhibitoren zusammengesetzt ist. Im Anteil des Harz-Härter-Beschleuniger-Gemenges sind neben zumindest einem Harz oder einem Harzgemisch aus einer Mehrzahl von Harzen 1,2 bis 2 Volumenprozent eines Härters oder eines Härtergemisches und 0,8 bis 1,8 Volumenprozent eines Beschleunigers oder eines Beschleunigergemisches bezogen auf den Anteil des Harz-Härter-Beschleuniger-Gemenges enthalten.
Als Harz wird ein herkömmliches Harz als Bindemittel, beispielweise, ein Polyesterharz, ein Epoxidharz und/oder ein analoges Reaktionsharz, oder ein Gemisch aus einer Mehrzahl herkömmlicher Harze verwendet. Das Harz oder Harzgemisch aus einer Mehrzahl von Harzen weist zweckmäßigerweise eine Wärmeformbeständigkeit (HDT) von mindestens 90°C auf. Durch den Einsatz polyfunktionaler Harze wird über die Vernetzung das Schwundverhalten signifikant beeinflusst.

Als Härter wird ein Härter oder ein Gemisch aus einer Mehrzahl von unterschiedlichen Härtern verwendet, wobei eine chemische Zusammensetzung des Härters im Vergleich zu herkömmlichen Härtern verändert ist und insbesondere an den jeweiligen Füllstoff oder das jeweilige Füllstoffgemisch angepasst ist. Dabei wird insbesondere ein Molekülaufbau des Härters auf den jeweiligen Füllstoff oder das jeweilige Füllstoffgemisch abgestimmt. Dabei ist die Reaktionszeit und Aushärtezeit des Härters und deren Verlaufskurven an das Gemisch und/oder an das zu gießende Formteil angepasst.

Als Beschleuniger wird erfindungsgemäß ein Cobalt-Amin-Beschleuniger verwendet, wobei die chemische Zusammensetzung des Beschleunigers im Vergleich zu herkömmlichen Beschleunigern verändert ist und insbesondere an den jeweiligen Füllstoff oder das jeweilige Füllstoffgemisch angepasst ist. Dabei wird insbesondere der Molekülaufbau des Beschleunigers auf den jeweiligen Füllstoff oder das jeweilige Füllstoffgemisch und/oder auf das zu gießende Formteil abgestimmt. Des Weiteren werden vorteilhafterweise die Reaktionszeit, die Reaktionstemperatur und deren Verlaufskurven an das Gemisch angepasst.

Die Mengenverhältnisse der einzelnen Zuschlagstoffe, also des Harzes, des Härters und des Beschleunigers, der Additive und Inhibitoren, werden anhand der zu erzielenden chemisch-physikalischen Eigenschaften des herzustellenden Polymerbetons, des geforderten Abbindeverhaltens und in Abhängigkeit des verwendeten Füllstoffs oder des verwendeten Füllstoffgemischs sowie der Geometrie des zu gießenden Formteiles eingestellt.

Als Füllstoff oder Füllstoffgemisch werden gebrochene Mineralstoffe wie ungereinigter Gesteinsbruch und Gesteinsmehl, ungereinigter und/oder unklassifizierter Sand, insbesondere herkömmlicher Steppen- und/oder Wüstensand, ohne Zusätze von klassifizierten Zusatzstoffen, wie z.B. Calciumcarbonat, Quarzsand u.Ä., verwendet, wobei der Füllstoff oder das Füllstoffgemisch mit organischem Material verunreinigt und/oder versetzt ist. Dadurch entfällt vorteilhafterweise eine aufwendige Aufarbeitung oder Reinigung des Füllstoffs oder des Füllstoffgemischs.

Zur Herstellung des Polymerbetons kann der Füllstoff oder das Füllstoffgemisch auf eine vorgebbare Korngröße gesiebt und auf eine vorgebbare Restfeuchte getrocknet werden, beispielsweise auch vollständig getrocknet werden. In einer alternativen Ausführungsform kann der Füllstoff oder das Füllstoffgemisch ohne aufwendige Aufarbeitung direkt zur Herstellung des Polymerbetons verwendet werden. Dies ist insbesondere bei der Verwendung von herkömmlichem Steppen- und/oder Wüstensand der Fall.

Alternativ kann das Füllstoffgemisch unterschiedliche Korngrößen aufweisen.

Besonders vorteilhafterweise kann der Füllstoff oder das Füllstoffgemisch aus herkömmlichen Abraum- und/oder Recyclingmaterial bestehen.

Besonders zweckmäßigerweise sind regional vorhandene Füllstoffe oder Füllstoffgemische verwendbar, so dass beispielweise in Afrika dort vorhandener Wüstensand ohne weitere Aufarbeitung direkt als Füllstoff verwendbar ist.

Dabei können insbesondere der Wüstensand und das Abraum- und/oder Recyclingmaterial direkt zur Herstellung des Polymerbetons verwendet werden ohne dass das, wie beim standardisierten Polymerbeton, darin enthaltene organische Material und/oder weitere Verunreinigungen entfernt werden müssen.

Um höhere Festigkeiten des Polymerbetons zu erzielen, sind in den Füllstoff oder in das Füllstoffgemisch Kunst- und/oder Naturfasern einbringbar. Dabei kann es sich beispielweise um Glasfasern, Bambusfasern, Industriehanf und/oder Flachs handeln.

In einer besonders vorteilhaften Ausführungsform können die Kunst- und/oder Naturfasern zu einem reißfesten Gewebe, beispielsweise einer Matte, verwirkt sein und derart in den Polymerbeton eingebracht werden.

In den Füllstoff oder in das Füllstoffgemisch sind vorteilhafterweise Farbpigmente und/oder Farbstoffe gleich verteilt oder in Form eines Musters oder einer Marmorierung einbringbar. Somit sind Formelemente aus Polymerbeton auf einfache Weise in allen Farben und Mustern oder Marmorierungen herstellbar.

Alle Zuschlagstoffe des Polymerbetons werden auf herkömmliche Weise vermischt und beispielweise in Formen gegossen.

Ein durch das Vermischen gestarteter Polymerisations- und Abbindevorgang des Polymerbetons erfolgt bevorzugter Weise bei Umgebungsdruck und bei Umgebungstemperatur, mindestens bei 20°C, so dass jegliche energieintensive Erwärmung und/oder Druckerhöhung während des Polymerisations-, Gieß- und/oder Abbindevorgangs nicht notwendig ist.

Die Dauer des Polymerisations- und/oder Abbindevorgangs beträgt vorteilhafterweise 10 bis 60 Minuten. Dadurch ist eine herkömmliche Dauer des Polymerisations- und/oder Abbindevorgangs und auch eine daraus resultierende Verweildauer des Formelements aus Polymerbeton in einer Form signifikant reduziert.

In einem ersten, nicht erfindungsgemäßen Ausführungsbeispiel für einen Polymerbeton ist der selbige aus 85 Volumenprozent eines Wüstensandes aus Libyen als Füllstoff, der sich laut Mineralphasenzusammensetzung mittels Röntgenfluoreszenzanalyse aus den Hauptbestandteilen Siliciumdioxid, Mikroklin, Calcit, Magnesium Calcit, Dolomit und Aragonit zusammensetzt, 14,9 Volumenprozent eines ungesättigten Polyesterharzes und 0,1 Volumenprozent eines Inhibitors auf Basis von 4-tert-Butyl-1,2-dihydroxybenzen gebildet. In dem Harzanteil enthalten sind 1 Volumenprozent eines Cobalt- Amin- Beschleunigers und 1,4 Volumenprozent eines MEKP-AAP - Härters bezogen auf den Harzanteil, d. h. korrekt ausgedrückt handelt es sich bei dem Harzanteil von 14,9 Volumenprozent um ein Harz-Härter-Beschleuniger-Gemenge, welches das ungesättigte Polyesterharz sowie 1 Volumenprozent des Cobalt- Amin- Beschleunigers und 1,4 Volumenprozent des MEKP-AAP - Härters aufweist.

In einem zweiten, erfindungsgemäßen Ausführungsbeispiel für einen Polymerbeton ist der selbige aus 86 Volumenprozent eines Wüstensands aus Qatar als Füllstoff, dessen

Hauptbestandteile Siliciumdioxid und Calciumcarbonat, in Form von Kalk oder Muschelkalk ist, 13,8 Volumenprozent eines ungesättigten Polyesterharzes, 0,1 Volumenprozent des Additives Dimethyl Pabamidopropyllaurdimonium-tosylat und 0,1 Volumenprozent eines Inhibitors auf Basis von 4-tert-Butyl-1,2-dihydroxybenzen gebildet. In dem Harzanteil enthalten sind 1,4 Volumenprozent eines Misch-Beschleunigers und 1,2 Volumenprozent eines Härters bezogen auf den Harzanteil, d. h. korrekt ausgedrückt handelt es sich bei dem Harzanteil von 13,8 Volumenprozent um ein Harz-Härter-Beschleuniger-Gemenge, welches das ungesättigte Polyesterharz sowie 1,4 Volumenprozent des Misch-Beschleunigers und 1,2 Volumenprozent des Härters aufweist.

In einem dritten, erfindungsgemäßen Ausführungsbeispiel für einen Polymerbeton ist der selbige aus 85,5 Volumenprozent eines Wüstensands aus Tunesien als Füllstoff, der sich laut Mineralphasenzusammensetzung mittels Röntgenfluoreszenzanalyse aus den Hauptbestandteilen Siliciumdioxid und Mikroklin zusammen setzt, 14,4 Volumenprozent eines ungesättigten Polyesterharzes und 0,1 Volumenprozent eines Inhibitors auf Basis von 4-tert-Butyl-1,2-dihydroxybenzen gebildet. In dem Harzanteil enthalten sind 0,8 Volumenprozent eines Cobalt-Amin- Beschleunigers und 1,2 Volumenprozent eines MEKP-AAP - Härters bezogen auf den Harzanteil, d. h. korrekt ausgedrückt handelt es sich bei dem Harzanteil von 14,4 Volumenprozent um ein Harz-Härter-Beschleuniger-Gemenge, welches das ungesättigte Polyesterharz sowie 0,8 Volumenprozent des Cobalt- Amin- Beschleunigers und 1,2 Volumenprozent des MEKP-AAP - Härters aufweist.

Der erfindungsgemäße Polymerbeton kann bevorzugt zur Herstellung von Form-, Struktur- oder Bauelementen zur Verwendung im Hochbau sowie im Innen- und Außenbereich verwendet werden.

### BEZUGSZEICHENLISTE

- 1: Polymerbetonschicht
- 2: Oberflächenschicht
- 3: Schicht des Polymerbetongemisches

## Patentansprüche

1. Polymerbeton,
**dadurch gekennzeichnet, dass** das Polymerbetongemisch aus
▪ 83 bis 87 Volumenprozent eines Füllstoffs oder eines Füllstoffgemischs,
▪ 12,9 bis 16,9 Volumenprozent eines Harz-Härter-Beschleuniger-Gemenges aus zumindest einem Harz, einem Härter oder Härtergemisch und einem Beschleuniger oder Beschleunigergemisch, und
▪ 0,1 bis 0,5 Volumenprozent zumindest eines Additivs oder 0,1 bis 0,5 Volumenprozent zumindest eines Additivs und Inhibitors besteht,
wobei das zumindest eine Additiv ein organisches Additiv mit zumindest einem konjugierten Doppelbindungssystem ist, wobei das Harz-Härter-Beschleuniger-Gemenge 1,2 bis 2 Volumenprozent Härter oder Härtergemisch und 0,8 bis 1,8 Volumenprozent Beschleuniger oder Beschleunigergemisch aufweist, wobei der Beschleuniger oder das Beschleunigergemisch ein Cobalt-Amin-Beschleuniger ist, und wobei der Füllstoff oder das Füllstoffgemisch ausschließlich aus ungereinigtem Gesteinsbruch und/oder ungereinigtem Gesteinsmehl und/oder ungereinigtem und/oder unklassifiziertem Sand ohne Zusätze von klassifizierten Zusatzstoffen gebildet ist, wobei der Füllstoff oder das Füllstoffgemisch mit organischem Material verunreinigt und/oder versetzt ist.

2. Polymerbeton nach Anspruch 1,
**dadurch gekennzeichnet, dass** der Härter oder das Härtergemisch und der Beschleuniger oder das Beschleunigergemisch eine auf den jeweiligen Füllstoff oder das jeweilige Füllstoffgemisch abgestimmte chemische Zusammensetzung und/oder einen abgestimmten Molekülaufbau aufweisen.

3. Polymerbeton nach einem der vorhergehenden Ansprüche,
**dadurch gekennzeichnet, dass** das zumindest eine Additiv Dimethyl-Pabamidopropyllaurdimonium-tosylat ist.

4. Polymerbeton nach einem der vorhergehenden Ansprüche,
**dadurch gekennzeichnet, dass** das Polymerbetongemisch aus 85 Volumenprozent eines Füllstoffgemischs, dessen Hauptbestandteile Siliciumdioxid, Mikroklin, Calcit, Magnesium Calcit, Dolomit und Aragonit sind, 14,9 Volumenprozent eines Harz-Härter-Beschleuniger-Gemenges, welches aus einem ungesättigten Polyesterharz, 1 Volumenprozent eines Cobalt-Amin-Beschleunigers und 1,4 Volumenprozent eines Methylethylketonperoxid-Acetylacetonperoxid-Härters gebildet ist, und 0,1 Volumenprozent eines Inhibitors auf Basis von 4-tert-Butyl-1,2-dihydroxybenzen besteht.

5. Polymerbeton nach einem der vorherigen Ansprüche,
**dadurch gekennzeichnet, dass** in den Füllstoff oder in das Füllstoffgemisch Kunst- und/oder Naturfasern eingebracht sind.

6. Polymerbeton nach einem der vorherigen Ansprüche,
**dadurch gekennzeichnet, dass** in den Füllstoff oder in das Füllstoffgemisch Farbpigmente und/oder Farbstoffe gleich verteilt oder in Form eines Musters oder einer Marmorierung eingebracht sind.

7. Polymerbeton nach einem der vorherigen Ansprüche,
**dadurch gekennzeichnet, dass** das Polymerbetongemisch mit einem farblosen Gelcoat mit hoher Abriebfestigkeit und/oder Verwitterungsbeständigkeit als Oberflächenschicht (2) mit einer hohen mechanischen und/oder chemischen Beständigkeit umhüllt ist.

8. Verfahren zur Herstellung eines Polymerbetons nach einem der vorherigen Ansprüche, wobei ein Polymerbetongemisch aus
▪ 83 bis 87 Volumenprozent eines Füllstoffs oder eines Füllstoffgemischs,
▪ 12,9 bis 16,9 Volumenprozent eines Harz-Härter-Beschleuniger-Gemenges aus zumindest einem Harz, einem Härter oder Härtergemisch und einem Beschleuniger oder Beschleunigergemisch, und
▪ 0,1 bis 0,5 Volumenprozent zumindest eines Additivs oder 0,1 bis 0,5 Volumenprozent zumindest eines Additivs und Inhibitors erzeugt wird, wobei das zumindest eine Additiv ein organisches Additiv mit zumindest einem konjugierten Doppelbindungssystem ist, wobei das Harz-Härter-Beschleuniger-Gemenge 1,2 bis 2 Volumenprozent Härter oder Härtergemisch und 0,8 bis 1,8 Volumenprozent Beschleuniger oder Beschleunigergemisch aufweist, wobei der Beschleuniger oder das Beschleunigergemisch ein Cobalt-Amin-Beschleuniger ist, und wobei der Füllstoff oder das Füllstoffgemisch ausschließlich aus ungereinigtem Gesteinsbruch und/oder ungereinigtem Gesteinsmehl und/oder ungereinigtem und/oder unklassifiziertem Sand ohne Zusätze von klassifizierten Zusatzstoffen gebildet ist, wobei der Füllstoff oder das Füllstoffgemisch mit organischem Material verunreinigt und/oder versetzt ist, wobei das Polymerbetongemisch polymerisiert und ausgehärtet wird.

9. Verfahren nach Anspruch 8,
**dadurch gekennzeichnet, dass** der Polymerisations- und Abbindevorgang bei Umgebungsdruck erfolgt.

10. Verfahren nach Anspruch 8 oder 9,
**dadurch gekennzeichnet, dass** der Polymerisations- und Abbindevorgang bei einer Umgebungstemperatur von mindestens 20°C erfolgt.

11. Verfahren nach einem der Ansprüche 8 bis 10,
**dadurch gekennzeichnet, dass** die Dauer des Polymerisations- und/oder Abbindevorgangs 10 bis 60 Minuten beträgt.

12. Verfahren nach einem der Ansprüche 8 bis 11,
**dadurch gekennzeichnet, dass** das Polymerbetongemisch nach dem Anmischen in eine Form gefüllt und darin polymerisiert und abgebunden wird, wobei die Form während des Einfüllens und/oder nach dem Einfüllen gerüttelt wird.

## Claims

1. Polymer concrete,
**characterized in that** the polymer concrete mixture consists of
▪ 83 to 87 volume per cent of a filler or a filler mixture,
▪ 12.9 to 16.9 volume per cent of a resin-hardener-accelerator combination comprising at least one resin, a hardener or hardener mixture and an accelerator or accelerator mixture, and
▪ 0.1 to 0.5 volume per cent of at least one additive or 0.1 to 0.5 volume per cent of at least one additive and inhibitor,
wherein the at least one additive is an organic additive having at least one conjugated double-bond system, wherein the resin-hardener-accelerator combination contains 1.2 to 2 volume per cent of hardener or hardener mixture and 0.8 to 1.8 volume per cent of accelerator or accelerator mixture, wherein the accelerator or accelerator mixture is a cobalt-amine accelerator, and wherein the filler or filler mixture is formed exclusively of uncleaned rock fragments and/or uncleaned rock flour and/or uncleaned and/or unclassified sand without additions of classified adjuvants, wherein the filler or filler mixture is admixed with or impure due to organic material.

2. Polymer concrete according to Claim 1,
**characterized in that** the hardener or hardener mixture and the accelerator or accelerator mixture have a molecular construction and/or chemical composition tailored to the particular filler or particular filler mixture.

3. Polymer concrete according to either of the preceding claims,
**characterized in that** the at least one additive is dimethyl pabamidopropyllaurdimonium tosylate.

4. Polymer concrete according to any of the preceding claims,
**characterized in that** the polymer concrete mixture consists of 85 volume per cent of a filler mixture whose main constituents are silicon dioxide, microcline, calcite, magnesium calcite, dolomite and aragonite, 14.9 volume per cent of a resin-hardener-accelerator combination which is formed from an unsaturated polyester resin, 1 volume per cent of a cobalt-amine accelerator and 1.4 volume per cent of a methyl ethyl ketone peroxide-acetylacetone peroxide hardener, and 0.1 volume per cent of an inhibitor based on 4-tert-butyl-1,2-hydroxybenzene.

5. Polymer concrete according to any of the preceding claims,
**characterized in that** synthetic and/or natural fibres are incorporated in the filler or filler mixture.

6. Polymer concrete according to any of the preceding claims,
**characterized in that** colour pigments and/or dyes are equally distributed, or incorporated in the form of a pattern or marbling, in the filler or filler mixture.

7. Polymer concrete according to any of the preceding claims,
**characterized in that** the polymer concrete mixture is enveloped by a colourless gelcoat with high abrasion resistance and/or weathering stability as surface layer (2) with a high mechanical and/or chemical stability.

8. Method for producing a polymer concrete according to any of the preceding claims, wherein a polymer concrete mixture is produced from
▪ 83 to 87 volume per cent of a filler or a filler mixture,
▪ 12.9 to 16.9 volume per cent of a resin-hardener-accelerator combination comprising at least one resin, a hardener or hardener mixture and an accelerator or accelerator mixture, and
▪ 0.1 to 0.5 volume per cent of at least one additive or 0.1 to 0.5 volume per cent of at least one additive and inhibitor,
wherein the at least one additive is an organic additive having at least one conjugated double-bond system, wherein the resin-hardener-accelerator combination contains 1.2 to 2 volume per cent of hardener or hardener mixture and 0.8 to 1.8 volume per cent of accelerator or accelerator mixture, wherein the accelerator or accelerator mixture is a cobalt-amine accelerator, and wherein the filler or filler mixture is formed exclusively of uncleaned rock fragments and/or uncleaned rock flour and/or uncleaned and/or unclassified sand without additions of classified adjuvants, wherein the filler or filler mixture is admixed with or impure due to organic material, wherein the polymer concrete mixture is polymerized and cured.

9. Method according to Claim 8,
**characterized in that** the polymerization and setting procedure takes place under ambient pressure.

10. Method according to Claim 8 or 9,
**characterized in that** the polymerization and setting procedure takes place at an ambient temperature of at least 20°C.

11. Method according to any of Claims 8 to 10,
**characterized in that** the duration of the polymerization and/or setting procedure is 10 to 60 minutes.

12. Method according to any of Claims 8 to 11,
**characterized in that** the polymer concrete mixture, after preparation by mixing, is filled into a mould and polymerized and set therein, the mould being shaken during the filling process and/or after the filling process.

## Revendications

1. Béton polymère, **caractérisé en ce que** le mélange de béton polymère est constitué par :
- 83 à 87 pour cent en volume d'une charge ou d'un mélange de charges,
- 12,9 à 16,9 pour cent en volume d'un mélange résine-durcisseur-accélérateur constitué par au moins une résine, un durcisseur ou un mélange de durcisseurs et un accélérateur ou un mélange d'accélérateurs, et
- 0,1 à 0,5 pour cent en volume d'au moins un additif ou 0,1 à 0,5 pour cent en volume d'au moins un additif et un inhibiteur,
ledit au moins un additif étant un additif organique contenant au moins un système de doubles liaisons conjuguées, le mélange résine-durcisseur-accélérateur comprenant 1,2 à 2 pour cent en volume de durcisseur ou de mélange de durcisseurs, et 0,8 à 1,8 pour cent en volume d'accélérateur ou de mélange d'accélérateurs, l'accélérateur ou le mélange d'accélérateurs étant un accélérateur cobalt-amine, et la charge ou le mélange de charges étant formé exclusivement par des fragments de pierre non purifiés et/ou une farine de pierre non purifiée et/ou du sable non purifié et/ou non classifié sans ajouts d'additifs classifiés, la charge ou le mélange de charges étant contaminé et/ou mélangé avec un matériau organique.

2. Béton polymère selon la revendication 1, **caractérisé en ce que** le durcisseur ou le mélange de durcisseurs et l'accélérateur ou le mélange d'accélérateurs présentent une composition chimique et/ou une structure moléculaire accordées à la charge respective ou au mélange de charges respectif.

3. Béton polymère selon l'une quelconque des revendications précédentes, **caractérisé en ce que** ledit au moins un additif est le tosylate de diméthyl-pabamidopropyllaurdimonium.

4. Béton polymère selon l'une quelconque des revendications précédentes, **caractérisé en ce que** le mélange de béton polymère est constitué par 85 pour cent en volume d'un mélange de charges, dont les constituants principaux sont le dioxyde de silicium, la microcline, la calcite, la calcite de magnésium, la dolomite et l'aragonite, 14,9 pour cent en volume d'un mélange résine-durcisseur-accélérateur, qui est formé par une résine de polyester insaturée, 1 pour cent en volume d'un accélérateur cobalt-amine et 1,4 pour cent en volume d'un durcisseur peroxyde de méthyléthylcétone-peroxyde d'acétylacétone, et 0,1 pour cent en volume d'un inhibiteur à base de 4-tert-butyl-1,2-dihydroxybenzène.

5. Béton polymère selon l'une quelconque des revendications précédentes, **caractérisé en ce que** des fibres artificielles et/ou naturelles sont introduites dans la charge ou dans le mélange de charges.

6. Béton polymère selon l'une quelconque des revendications précédentes, **caractérisé en ce que** des pigments colorés et/ou des colorants sont répartis uniformément ou introduits sous la forme d'un motif ou d'un marbrage dans la charge ou dans le mélange de charges.

7. Béton polymère selon l'une quelconque des revendications précédentes, **caractérisé en ce que** le mélange de béton polymère est enrobé avec une couche de gel incolore de résistance à l'abrasion et/ou de résistance à l'effet des agents atmosphériques élevée en tant que couche de surface (2) ayant une résistance mécanique et/ou chimique élevée.

8. Procédé de fabrication d'un béton polymère selon l'une quelconque des revendications précédentes, dans lequel un mélange de béton polymère constitué par :
- 83 à 87 pour cent en volume d'une charge ou d'un mélange de charges,
- 12,9 à 16,9 pour cent en volume d'un mélange résine-durcisseur-accélérateur constitué par au moins une résine, un durcisseur ou mélange de durcisseurs et un accélérateur ou mélange d'accélérateurs, et
- 0,1 à 0,5 pour cent en volume d'au moins un additif ou 0,1 à 0,5 pour cent en volume d'au moins un additif et un inhibiteur, est formé,
ledit au moins un additif étant un additif organique contenant au moins un système de doubles liaisons conjuguées, le mélange résine-durcisseur-accélérateur comprenant 1,2 à 2 pour cent en volume de durcisseur ou de mélange de durcisseurs, et 0,8 à 1,8 pour cent en volume d'accélérateur ou de mélange d'accélérateurs, l'accélérateur ou le mélange d'accélérateurs étant un accélérateur cobalt-amine, et la charge ou le mélange de charges étant formé exclusivement par des fragments de pierre non purifiés et/ou une farine de pierre non purifiée et/ou du sable non purifié et/ou non classifié sans ajouts d'additifs classifiés, la charge ou le mélange de charges étant contaminé et/ou mélangé avec un matériau organique, le mélange de béton polymère étant polymérisé et durci.

9. Procédé selon la revendication 8, **caractérisé en ce que** le processus de polymérisation et de prise a lieu à pression ambiante.

10. Procédé selon la revendication 8 ou 9, **caractérisé en ce que** le processus de polymérisation et de prise a lieu à une température ambiante d'au moins 20 °C.

11. Procédé selon l'une quelconque des revendications 8 à 10, **caractérisé en ce que** la durée du processus de polymérisation et/ou de prise est de 10 à 60 minutes.

12. Procédé selon l'une quelconque des revendications 8 à 11, **caractérisé en ce que** le mélange de béton polymère est placé dans un moule après le mélange et y est polymérisé et pris, le moule étant vibré pendant le remplissage et/ou après le remplissage.
